# EUROPÄISCHE PATENTSCHRIFT

(11) **EP 0 666 615 B1**
(45) Veröffentlichungstag und Bekanntmachung des Hinweises auf die Patenterteilung: **06.11.1996**
(21) Anmeldenummer: 95100339.1
(22) Anmeldetag: 12.01.1995
(51) Int. Cl.: H01R 9/03, H01R 4/24, H02G 15/10

(54) **Kabelabzweigmuffe für Hausanschlüsse**
Cable branching box for junctions to houses
Boîte de dérivation de câbles pour jonctions à des maisons

(30) Priorität: 08.02.1994 DE 4403811
(43) Veröffentlichungstag der Anmeldung: 09.08.1995
(73) Patentinhaber: Felten & Guilleaume Energietechnik AG, D-51063 Köln (DE)
(72) Erfinder: Meyer, Stephan, Dipl.-Ing., D-26919 Brake (DE); Jaschke, Georg, D-26954 Nordenham (DE); Czernek, Georg, D-86415 Mering (DE)

(56) Entgegenhaltungen:
- EP-A- 0 492 197
- EP-A- 0 512 923
- DE-A- 2 228 273
- DE-A- 7 641 181

## Beschreibung

Die Erfindung betrifft eine Kabelabzweigmuffe für Hausanschlüsse nach dem Oberbegriff des Anspruchs 1.

Kabelabzweigmuffen für Hausanschlüsse, deren Montage ohne Stromabschaltung erfolgen kann, sind bekannt. Sie sind unter Verwendung von Abzweigklemmen, deren Kontaktelemente für die Adern des Hauptkabels deren Isolationshülle durchdringen, Dichtmassen und Muffenschalen bzw. Muffenmanschetten in Gießharztechnik oder Schrumpftechnik ausgeführt.

So ist eine in Schrumpftechnik ausgeführte Abzweigmuffe für PVC-isolierte 4-Leiter-Kabel 1 kV ohne Bewehrung unter Verwendung einer Abzweigklemme Typ ARCUS oder PFISTERER aus der Montageanleitung EPP 0380 D 9/90 der Raychem GmbH bekannt. Diese Muffe weist im Bereich der freigelegten Adern des abgesetzten Hauptkabels und des Abzweigkabels an die Kabelmäntel grenzende Filzwickel auf, die aus zwischen den Adern hindurchgezogenen und mit einem Klebeband zu einem Wickel um die Adern gelegten Filzstreifen gebildet sind. Im Bereich der freigelegten Adern des Hauptkabels sind an einer vorbestimmbaren Stelle die Isolationshülle der Adern durchstoßende Mehrfachklemmen (Abzweigklemme) mit im Abstand zum Hauptkabel angeordneten Adern des Abzweigkabels und im Bereich der Abzweigklemme im Zwickel des Hauptkabels ein Dichtmassestrang angeordnet. Die gesamte zwischen den Filzwickeln befindliche Abzweiganordnung ist in einer Dichtmasseschicht eingehüllt. Diese, die Filzwickel und die angrenzenden Kabelenden sind von einer aus einer wärmegeschrumpften Manschette bestehenden Umhüllung umgeben, die dicht und völlig an den Kabelmänteln des Hauptkabels und des Abzweigkabels anliegt. Abzweigkabelseitig ist zur Unterstützung der abdichtenden Anordnung der Manschette zwischen dem Hauptkabel und dem Abzweigkabel eine Abzweigklammer angeordnet. Die Muffe ist durch die Anordnung der Dichtmasse zwischen den Adern des Hauptkabels im Bereich der Abzweigklemme und durch die zwischen der Manschette und der Abzweigklemme angeordnete Dichtmasse im Bereich der Abzweigklemme querabgedichtet.

Aus der DE-A-4041781 (Korrespondierende EP-A-0 492 197) ist eine Abzweigmuffe für ein 4-adriges Niederspannungskabel und ein 4-adriges Abzweigkabel mit einer Abzweigklemme - einer sog. Kernklemme - bekannt, bei der die Abzweiganordnung und die angrenzenden Kabelmantelenden beider Kabel von einer aus einer wärmegeschrumpften Manschette bestehenden äußeren Umhüllung umgeben sind, deren Längskanten durch eine flexible Schiene miteinander verbunden sind. Zum Zwecke der Abdichtung gegenüber der Kernklemme und den Kabelabgängen ist die Manschette in ihrem Inneren mit einem Heißschmelzkleber oder an ihren Enden mit einem solchen und im Bereich der Kernklemme mit einer plastischen Dichtmasse versehen. Der Zwickelbereich des Hauptkabels ist im Bereich der montierten Kernklemme zum Zwecke einer Querabdichtung der Muffe in diesem Bereich von einer dauerplastischen Masse abgedichtet, wobei diese beim Zusammenschrauben der aus zwei Teilen bestehenden Kernklemme aus einer in deren Trennflächenbereich angeordneten Kammer in den Zwickelbereich eingedrungen ist. Die genannte und mit einer dauerplastischen Masse gefüllte Kammer verringert beim Zusammenschrauben ihr Volumen, wodurch ein Teil der Masse als Dichtmasse in den Zwickelraum gepreßt wird. Der Bereich zwischen dem Hauptkabel und dem Abzweigkabel ist auch bei dieser Muffe mit Unterstützung durch eine Abzweigklammer abgedichtet.

Weiterhin ist aus der DE-GM 7641181 ein mehradriges Starkstromkabel mit einer zwei Kabelenden miteinander verbindenden Verbindungsmuffe bekannt, die aus einem die Verbindungsstelle umgebenden, mit einer Isoliermasse gefüllten Gehäuse gebildet ist. Die Verbindungsstelle der beiden Kabelenden ist dabei so gestaltet, daß die Enden der jeweils elektrisch miteinander zu verbindenden Leiter achsparallel zueinander angeordnet und mittels einer an sich bekannten, handelsüblichen Kompakt-Abzweigklemme verbunden sind. Die aus einem Unterteil und einem Oberteil bestehende Klemme enthält Kontaktstücke, die in Isolierstücke eingebettet sind, wobei jedes Kontaktstück einen zahnförmigen Bereich für die nicht abisolierten Adern des einen Starkstromkabels und eine Bohrung für die abisolierten Leiter des anderen Starkstromkabels aufweist. An jeder Bohrung ist eine Druckschraube zum Anklemmen der abisolierten Leiterenden angeordnet. Zur elektrischen Kontaktierung der Adern mit den Leitern sind das Oberteil und das Unterteil der Klemme miteinander verspannt, so daß die zahnförmigen Bereiche der Kontaktstücke durch die Aderisolierung hindurch in die Leiter hineingepreßt sind.

Der Aufwand bei der Montage dieser Muffen ist relativ groß, Reparaturarbeiten sind nur mit relativ großem Aufwand durchführbar, und eine nach dem Gebrauch der Muffen notwendig werdende Demontage in die Grundbestandteile Abzweigklemme, Dichtmasse und Muffengehäuse ist ebenfalls mit einem erheblichen Aufwand verbunden.

Es ist deshalb Aufgabe der Erfindung, eine Abzweigmuffe unter Verwendung einer Abzweigklemme und einer dauerplastischen Dichtmasse zu schaffen, bei der der aüßere Bereich der Abzweigklemme gegenüber der äußeren Umhüllung der Muffe, die Abzweigleiteranschlüsse und der Zwickelraum des Hauptkabels im Abzweigklemmenbereich zum Zwecke einer Querabdichtung der Muffe im Bereich der Abzweigklemme und die Kabeleingänge vollständig abgedichtet sind, und die relativ einfach montierbar und relativ einfach wieder in ihre Grundbestandteile zerlegbar und recycelbar ist.

Die Aufgabe wird bei einer Kabelanschlußmuffe nach dem Oberbegriff des Anspruchs 1 durch dessen kennzeichnende Merkmale gelöst.

Der besondere Vorteil der erfindungsgemäßen Abzweigmuffe liegt sowohl in ihrer nur wenig aufwendigen Montage durch eine den Anschluß von isolierten Leitern (Adern) ermöglichende Abzweigklemme und durch den Einsatz der erfindungsgemäßen vorgefertigten Muffenhalbschalen mit teilweise integriertem Dichtsystem als auch in ihrer problemlosen Demontage. Die Muffe gestattet in Verbindung mit der erfindungsgemäßen Abzweigklemme eine definierte Anordnung der Adern des Haupt- und des Abzweigkabels. Die Muffenanordnung ist frei von Vergußmassen, deren Entsorgung - insbesondere die Entsorgung von Gießharzen und deren gesundheitsschädlichen Anteilen von Isocyanat - aufwendig und problematisch ist (Sondermüll), und somit umweltfreundlich. Die Abzweigmuffe kann jederzeit wieder in ihre Grundelemente Muffenhalbschalen, Abzweigklemme und Dichtmasse zerlegt und recycelt werden. Ebenso kann die Abzweigmuffe zu Reparaturzwecken geöff net und anschließend wieder geschlossen werden. Ein weiterer Vorteil ist, daß die Muffe im Bereich der Abzweigklemme querfeuchtigkeitsabgedichtet ist, d.h., so abgedichtet ist, daß ein übergang von in Längsrichtung eindringender Feuchtigkeit von einer Muffenhälfte in die andere unterbunden ist. Die Muffe ist längswasserdicht. Auch wird ein Eindringen von Feuchtigkeit in die Anschlußkammern der Abzweigleiter durch die Anordnung von Dichtmasse im Bereich der Schneidkontakte unterbunden.

Das im Anspruch 2 aufgeführte Merkmal dient einer definierten Relativlage der Muffenhalbschalen zur Abzweigklemme und trägt zur Querabdichtung im Bereich der Abzweigklemme bei.

Das Merkmal gemäß Anspruch 3 stellt eine einfache und wirksame Lösung zur Querabdichtung der Abzweigklemme im Bereich der Durchführung der Adern in der Abzweigklemme dar.

Die im Anspruch 4 und 5 aufgeführten Merkmale gestatten in einfacher Weise das Zusammenfügen der beiden Teile der Abzweigklemme und, damit verbunden, die Kontaktherstellung zwischen den Leitern des Hauptkabels und des Abzweigkabels sowie das Vollziehen der Abdichtung im Bereich der Abzweigklemme.

Durch die Maßnahme gemäß Anspruch 6 wird ein die Abdichtung des Abzweigkabels im Bereich des Kabeleinganges 6 gegenüber dem Muffengehäuse verstärkendes Zwei-Kammer-System gebildet.

Die Erfindung wird nachstehend anhand eines Ausführungsbeispiels erläutert. In der zugehörigen Zeichnung zeigen:
- Fig. 1: eine Draufsicht auf eine geschlossene Abzweigmuffe mit angedeuteter Abzweigklemme und montierten Kabeln,
- Fig. 2: eine geöffnete Abzweigmuffe mit Abzweigklemme und montierten Kabeln,
- Fig. 3: einen Schnitt durch die Abzweigklemme, quer zu den Kabelachsen und
- Fig. 4: einen Schnitt durch eine Seite der Abzweigklemme, parallel zu den und durch die Kabelachsen.

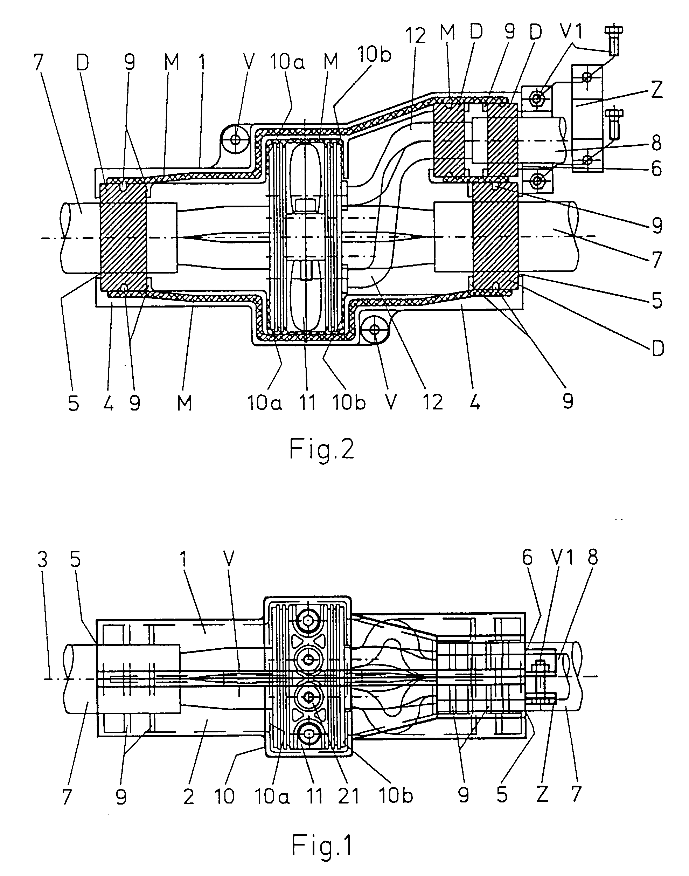

Die in Fig. 1 und Fig. 2 dargestellte Abzweigmuffe weist zwei Muffenhalbschalen **1** und **2** auf, die entlang der Linie **3** mit Fügeflächen **4** (Fig. 2) aufeinander angeordnet sind. Im Bereich der Kabeleingänge **5** und **6** für das Hauptkabel **7** und das Abzweigkabel **8** sind konzentrische Rippen **9** ausgebildet. Im Bereich zwischen den Kabeleingängen **5** und **6** ist eine Aufnahme **10** mit zwei im Abstand und quer zur Muffenlängsachse ausgebildeten Anlageflächen **10a** und **10b** für die Abzweigklemme **11** angeordnet.

Die Adern **12** des Abzweigkabels **8** sind phasengerecht an der Abzweigklemme **11** angeschlossen. Die Phasenfolge an der Abzweigklemme **11** ist durch das Hauptkabel **7** vorgegeben. Zwischen dem vorbestimmten Kabeleingang **6** für das Abzweigkabel **8** und der Abzweigklemme **11** sind die Adern **12** derart gebogen, daß der phasengerechte Anschluß an der Abzweigklemme **11** gegeben ist. Die beiden Muffenhalbschalen **1** und **2** sind jeweils bei **V** miteinander verschraubbar ausgebildet. An den Fügeflächen **4** und in der Aufnahme **10** sind sie mit Dichtmasse **M** beschichtet.

An den Kabeleingängen **5** und **6** sind im Bereich der Rippen **9** Dichtelemente **D** aus Schaumstoff angeordnet, wobei im Bereich des Kabeleingangs **6** abzweigklemmenseitig ein zusätzliches Dichtelement **D** zur Zwickelabdichtung des Abzweigkabels **8** eingesetzt ist.

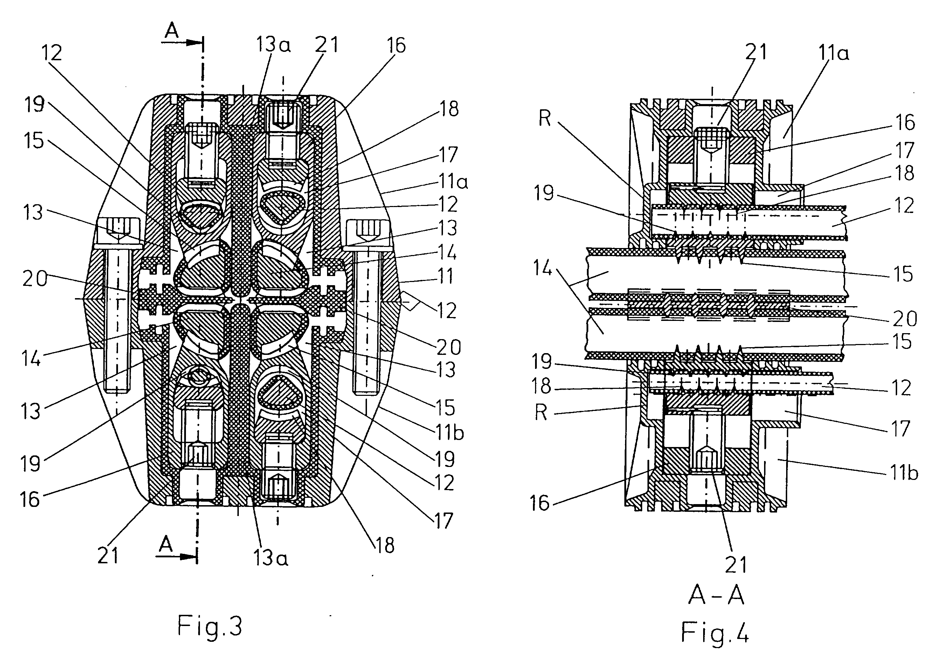

In den Figuren **3** und **4** ist eine Abzweigklemme **11** mit den Teilen **11a** und **11b** dargestellt. An den Trennflächen **11c** sind in jedem Teil **11a** und **11b** zwei Mulden **13** für jeweils eine Ader **14** des Hauptkabels **7** angeordnet, die an ihrem Grund jeweils mehrere Kontaktschneiden **15** aufweisen. Die Mulden **13** sind durch einen Steg **13a** aus Kunststoff voneinander getrennt. Die Kontaktschneiden **15** sind jeweils an dem Gehäuse **16** einer rückseitig geschlossenen Anschlußkammer **17** für eine **Ader 12** des Abzweigkabels **8** ausgebildet und somit elektrisch mit diesem verbunden. Der Grund der Mulden **13** ist mit Dichtmasse **M** beschichtet. In den Anschlußkammern **17** sind Schneidkontakte **18** und **19** angeordnet, von denen die Schneidkontakte **18** schraubverstellbar sind. Die Anschlußkammern **17** sind im Bereich der Schneidkontakte **18** und **19** mit Dichtmasse **M** beschichtet. Die beiden Teile **11a** und **11b** der Abzweigklemme **11** sind im montierten Zustand miteinander verschraubt, wobei zwischen diesen bzw. den in diesen angeordneten Adern **14** des Hauptkabels **7** mit Dichtmasse **M** beschichtete Aderkeile **20** aus Kunststoff eingelegt sind.

Die Montage der Muffe erfolgt in der Weise, daß nach der gängigen Abzweigtechnik das Hauptkabel **7** abgesetzt, die Adern **14** leicht auseinandergespreizt und ein zwischen diesen befindliches Zwickelband entfernt werden. Zwischen die gegenüberliegenden Adern **14** der zu montierenden Teile **11a** und **11b** werden mit Dichtmasse **M** beschichtete Aderkeile 20 (Fig. 3, Fig. 4) eingelegt. Anschließend werden die beiden Teile **11a** und **11b** der Abzweigklemme **11** an den Adern **14** positioniert, wobei jeder Teil jeweils zwei Adern **14** in den entsprechenden Mulden **13** aufnimmt. Dann wird das Abzweigkabel **8** abgesetzt, ein zwischen dessen Adern **12** befindliches Zwickelfüllband entfernt, das abzweigklemmenseitige Dichtelement **D** zur Zwickelabdichtung montiert, damit bei einem Kabelfehler keine Feuchtigkeit in die Abzweigmuffe gelangen kann, die Adern **12** phasengerecht gebogen, die Aderenden in die entsprechenden und mit Dichtmasse **M** beschichteten Anschlußkammern **17** der Abzweigklemme **11** bis zum Anschlag an der Rückwand **R** gesteckt und die Schneidkontakte **18** jeweils mittels einer Schraube **21** durch die Aderisolierung hindurch auf die jeweiligen Leiter der Adern **12** gedrückt und mit diesen festgeklemmt. Dabei wird die in den Anschlußkammern **17** im Bereich der Schneidkontakte **18** und **19** befindliche Dichtmasse **M** verdrückt. Nun kann die Abzweigklemme **11** mit dem Hauptkabel **7** angeschlossen werden, indem die beiden Teile **11a** und **11b** miteinander verschraubt werden. Dabei wird die Dichtmasse **M** im Bereich der Adern **14** verdrückt. Die auf den Kontaktschneiden **15** befindliche Dichtmasse **M** wird dabei ebenfalls verquertscht, und die Kontaktschneiden **15** durchdringen die Isolation der Adern **14**. Die Abzweigklemme **11** ist montiert, die elektrische Verbindung hergestellt und die Abdichtung innerhalb der Abzweigklemme **11** vollzogen. Im Anschluß daran werden die Dichtungselemente **D** aus Schaumstoff für den Bereich der Kabeleingänge **5** und **6** um den Hauptleiter **7** und den Abzweigleiter **8** gelegt und die Muffenhalbschalen **1** und **2** um die montierte Abzweigklemme **11** positioniert, derart, daß diese von der Aufnahme **10** umschlossen wird, wodurch eine definierte Position der Abzweigklemme **11** in der Abzweigmuffe gegeben ist. Beim anschließenden Zusammendrücken und Verschrauben der Muffenhalbschalen **1** und **2** wird die auf den Fügeflächen **4** und in der Aufnahme **10** vorhandene Dichtmasse **M** verdrückt. Beim Zusammenschrauben werden die Muffenhalbschalen **1** und **2** gegenüber den Enden der Kabel **7** und **8** und gegenüber der Abzweigklemme **11** vollständig abgedichtet. Damit ist die Abzweigmuffe sowohl nach außen als auch im Bereich der Abzweigklemme **11** völlig abgedichtet, und es kann keine Feuchtigkeit innerhalb der Muffe, beispielsweise bei einem Kabelfehler, von der einen Muffenseite in die andere gelangen.

Die Muffe kann auf Wunsch mit einer Zugentlastung für das Abzweigkabel **8** versehen werden. Dazu sind zwei Klemmhalbschalen am Kabeleingang **6** vorgesehen, zwischen denen das Abzweigkabel **8** anordbar ist, und von denen die eine fest mit der Muffe verbunden und die andere (**Z**) gegen die erste verschraubbar ist.

## Patentansprüche

1. Abzweigmuffe für Hausanschlüsse mit einer zweigeteilten Abzweigklemme für ein Abzweigkabel mit die Kabelisolierungen durchdringenden Kontaktelementen, mit einer äußeren Umhüllung und mit einer plastischen Dichtmasse sowohl zwischen den Hauptkabeladern im Bereich der Abzweigklemme als auch zwischen dieser und der Umhüllung, **dadurch gekennzeichnet,** daß die Umhüllung aus zwei miteinander lösbar verbindbaren Muffenhalbschalen **(1; 2)** mit einander zugeordneten Fügeflächen **(4)** gebildet ist, daß jede Muffenhalbschale im Bereich der Kabeleingänge **(5; 6)** im Innern zu den Kabelachsen konzentrische Rippen **(9)** und in einer vorbestimmten Position zwischen den Kabeleingängen **(5; 6)** eine Aufnahme (**10**) für die Abzweigklemme **(11)** aufweist, daß an der Trennfläche **(11c)** eines jeden Teils **(11a; 11b)** der Abzweigklemme **(11)** zwei durch einen Steg **(13a)** aus Kunststoff getrennte Mulden **(13)** für jeweils eine Ader **(14)** des Hauptkabels **(7)** angeordnet sind, die in ihrem Inneren wenigstens eine Kontaktschneide **(15)** aufweisen, die mit einer umhüllungsseitig zugeordneten Anschlußkammer **(17)** mit Schneidkontakten **(18; 19)** für das Endstück einer Ader **(12)** des Abzweigkabels **(8)** elektrisch verbunden ist und daß im Bereich der Schneidkontakte **(18; 19),** der Kontaktschneide **(15)** und zwischen den Teilen **(11a)** und **(11b)** sowie an den Fügeflächen **(4)** Dichtmasse **(M)** und im Bereich der Rippen **(9)** Dichtelemente **(D)** angeordnet sind.

2. Abzweigmuffe nach Anspruch 1, **dadurch gekennzeichnet,** daß die Aufnahme **(10)** eine Ausweitung in radialer Richtung mit zwei im Abstand und quer zur Muffenlängsachse angeordneten Anlageflächen **(10a; 10b)** ist.

3. Abzweigmuffe nach Anspruch 1, **dadurch gekennzeichnet,** daß die Anschlußkammern **(17)** rückseitig geschlossen sind.

4. Abzweigmuffe nach Anspruch 1, **dadurch gekennzeichnet,** daß der Grund der Mulden **(13)** mit Dichtmasse **(M)** beschichtet ist und zwischen den Trennflächen **(11c)** der Teile **(11a; 11b)** der Abzweigklemme **(11)** mit Dichtmasse **(M)** beschichtete Aderkeile **(20)** aus Kunststoff angeordnet sind.

5. Abzweigmuffe nach Anspruch 1 oder 4, **dadurch gekennzeichnet,** daß die Teile **(11a, 11b)** der Abzweigklemme **(11)** miteinander verschraubbar sind.

6. Abzweigmuffe nach Anspruch 1, **dadurch gekennzeichnet,** daß zum Zwecke der Zwickelabdichtung des Abzweigkabels **(8)** im Bereich des Kabeleingangs **(6)** abzweigklemmenseitig ein weiteres Dichtelement **(D)** angeordnet ist.

7. Abzweigmuffe nach Anspruch 1 oder 6, **dadurch gekennzeichnet,** daß die Dichtelemente **(D)** Schaumstoffdichtungen sind.

8. Abzweigmuffe nach Anspruch 1, **dadurch gekennzeichnet,** daß am Kabeleingang **(6)** eine Klemmhalbschale fest angeordnet ist, mit der eine zweite Klemmhalbschale **Z** verschraubbar ist.

## Claims

1. A branch sleeve for domestic terminals with a branch clamp divided into two for a branch cable with contact members passing through the cable insulations, with an external casing and with a plastic sealing compound both between the main cable cores in the region of the branch clamp and between the said branch clamp and the casing, **characterized in that** the casing is formed by two half sleeve shells (1; 2) which can be releasably joined to each other and which have mutually associated join faces (4), each half sleeve shell has ribs (9) concentric with the cable axes in the region of the cable inputs (5; 6) in the interior and a means (10) for receiving the branch clamp (11) ) in a predetermined position between the cable inputs (5; 6), two hollows (13) separated by a web (13a) of plastics material for a respective core (14) of the main cable (7) are situated in the separating face (11c) of each part (11a; 11b) of the branch clamp (11), the hollows (13) being provided in their interior with at least one contact tongue (15) which is electrically connected to a connecting chamber (17) associated with the casing and having tongue contacts (18, 19) for the end portion of a core (12) of the branch cable (8), and sealing compound (M) is provided in the region of the tongue contacts (18; 19) and the contact tongue (15) and between the parts (11a) and (11b) as well as in the joint planes (4) and sealing member (D) are provided in the region of the ribs (9).

2. A branch sleeve according to Claim 1, **characterized in that** the receiving means (10) is a widening in the radial direction with two spaced abutment faces (10a; 10b) arranged transversely to the longitudinal axis of the sleeve.

3. A branch sleeve according to Claim 1, **characterized in that** the connecting chambers (17) are closed at the rear.

4. A branch sleeve according to Claim 1, **characterized in that** the base of the hollows (13) is coated with sealing compound (**M**), and core wedges (20) of plastics material and coated with sealing compound (**M**) are arranged between the separating faces (11c) of the parts (11a) and (11b) of the branch clamp (11).

5. A branch sleeve according to Claim 1 or 4, **characterized in that** the parts (11a, 11b) of the branch clamp (11) can be screwed together.

6. A branch sleeve according to Claim 1, **characterized in that** a further sealing member (**D**) is arranged in the region of the cable input (6) on the branch clamp for the seal filler of the branch cable (8).

7. A branch sleeve according to Claim 1 or 6, **characterized in that** the sealing members (**D**) are foam seals.

8. A branch sleeve according to Claim 1, **characterized in that** a half clamping shell, to which a second half clamping shell **Z** can be screwed, is arranged fixed to the cable input (6).

## Revendications

1. Manchon de dérivation pour jonctions à des maisons, comprenant une borne de dérivation en deux pièces pour un câble dérivé, comportant elle-même des éléments de contact qui traversent les isolants du câble, une enveloppe extérieure et une masse d'étanchéité plastique, aussi bien entre les âmes du câble principal, dans la région de la borne de dérivation, qu'entre cette dernière et l'enveloppe, caractérisé en ce que l'enveloppe est formée de deux demi-coquilles de manchon (1 ; 2) pouvant être assemblées l'une à l'autre de façon démontable et qui présentent des surfaces de joint (4) homologues l'une de l'autre, en ce que chaque demi-coquille de manchon présente, dans la région des entrées de câble (5 ; 6), à l'intérieur, des nervures (9) concentriques aux axes des câbles et, dans une position prédéterminée entre les entrées de câble (5 ; 6), un logement (10) pour recevoir la borne de dérivation (11), en ce que, sur la surface de séparation (11c) de chaque partie (11a ; 11b) de la borne de dérivation (11), sont agencés deux augets (13) séparés par un voile (13a) en matière plastique, prévu chacun pour une âme (14) du câble principal (7), augets qui présentent dans leur volume intérieur au moins une lame de contact (15) qui est connectée électriquement à une chambre de raccordement (17) solidaire de l'enveloppe, qui lui est associée et possède des contacts à lames (18 ; 19) destinés à attaquer la partie d'extrémité d'une âme (12) du câble dérivé (8), et en ce que, dans la région des contacts à lames (18 ; 19), de la lame de contact (15) et entre les parties (11a) et (11b) ainsi que sur les surfaces de joint (4), est disposée une masse d'étanchéité (M), tandis que des éléments d'étanchéité (D) sont agencés dans la région des nervures (9).

2. Manchon de dérivation selon la revendication 1, caractérisé en ce que le logement (10) est un élargissement dans la direction radiale présentant deux surfaces d'appui (10a ; 10b) disposées à un certain écartement et transversalement à l'axe longitudinal du manchon.

3. Manchon de dérivation selon la revendication 1, caractérisé en ce que les chambres de raccordement (17) sont fermées sur leur côté arrière.

4. Manchon de dérivation selon la revendication 1, caractérisé en ce que le fond des augets (13) est revêtu d'une masse d'étanchéité (M), et en ce qu'entre les surfaces de séparation (11c) des parties (11a ; 11b) de la borne de dérivation (11), sont disposées des clavettes d'âme (20) en matière plastique revêtues de masse d'étanchéité (M).

5. Manchon de dérivation selon la revendication 1 ou 4, caractérisé en ce que les parties (11a ; 11b) de la borne de dérivation (11) peuvent être assemblées l'une à l'autre par boulonnage.

6. Manchon de dérivation selon la revendication 1, caractérisé en ce que, pour l'étanchéité du vide intercalaire du câble dérivé (8), un élément d'étanchéité additionnel (D) est agencé dans la région de l'entrée de câble (6), sur le côté de la borne de dérivation.

7. Manchon de dérivation selon la revendication 1 ou 6, caractérisé en ce que les éléments d'étanchéité (D) sont des garnitures d'étanchéité en mousse.

8. Manchon de dérivation selon la revendication 1, caractérisé en ce qu'à l'entrée (6) du câble, est monté rigidement une demi-coquille de borne avec laquelle une deuxième demi-coquille de borne Z peut être assemblée par boulonnage.
